# EUROPÄISCHE PATENTSCHRIFT

(11) **EP 2 299 200 B1**
(45) Veröffentlichungstag und Bekanntmachung des Hinweises auf die Patenterteilung: **06.02.2013**
(21) Anmeldenummer: 09012038.7
(22) Anmeldetag: 22.09.2009
(51) Int. Cl.: F24H 3/04, F24H 9/18, H05B 3/24, B60H 1/22

(54) **Elektrische Heizvorrichtung**
Electric heating device
Dispositif de chauffage électrique

(43) Veröffentlichungstag der Anmeldung: 23.03.2011
(73) Patentinhaber: Eberspächer catem GmbH & Co. KG, 76863 Herxheim (DE)
(72) Erfinder: Bohlender, Franz, 76870 Kandel (DE); Niederer, Michael, 76889 Kapellen Drusweiler (DE); Reiß, Holger, 76764 Rheinzabern (DE)
(74) Vertreter: Grünecker, Kinkeldey, Stockmair & Schwanhäusser

(56) Entgegenhaltungen:
- EP-A1- 1 318 694
- DE-A1- 19 811 629
- FR-A1- 2 793 546

## Beschreibung

Die vorliegende Erfindung betrifft eine elektrische Heizvorrichtung insbesondere für ein Kraftfahrzeug mit einem Gehäuse, in dem wenigstens ein wärmeerzeugendes Element und mehrere in parallelen Schichten angeordnete wärmeabgebende Elemente angeordnet sind. In dem Gehäuse können mehrere wärmeerzeugende Elemente vorgesehen sein. Üblicherweise sind zu einem wärmeerzeugenden Element zwei wärmeabgebende Elemente vorgesehen, die an gegenüberliegenden Seiten des wärmeerzeugenden Elementes angelegt gehalten sind, um die von dem wärmeerzeugenden Element erzeugte Wärme an das zu erwärmende Medium abzuführen. So werden die wärmerabgebenden Elemente auch als Radiatorelemente bezeichnet, insbesondere dann, wenn eine Wärmabgabe an Luft gewünscht ist.

Die wärmeerzeugenden Elemente umfassen wenigsten ein PTC-Element, an dessen gegenüberliegenden Seitenflächen elektrische Leiterbahnen anliegen, durch welche das PTC-Element bestromt wird.

Gattungsbildende elektrische Heizvorrichtungen dienen insbesondere der Erwärmung von Luft zur Klimatisierung des Fahrzeuginnenraumes und werden verstärkt eingesetzt, um mit der verminderten Wärmeabgabe moderner Dieselmotoren verbundene Nachteile zu kompensieren, die darin zu sehen sind, dass insbesondere in der frühen Betriebsphase des Motors nicht hinreichend Wärme zur Verfügung steht, um den Fahrzeuginnenraum zu erwärmen, bzw. die Frontscheibe frei von Beschlag zu halten.

Eine gattungsgmäße elektrische Heizvorrichtung ist beispielsweise aus der DE 198 11 629 A1 bekannt. Der darin beschriebene Stand der Technik umfasst neben einem Wärmetauscher, der durch Ausführen eines Wärmeaustausches zwischen Luft und warmem Wasser den Fahrgastraum eines Kraftfahrzeuges erwärmt, auch eine elektrische Heizvorrichtung. Die elektrische Heizvorrichtung wird dabei gebildet aus mehrere PTC-Elementen, welche an beiden Seitenflächen zur elektrischen Bestromung mit Leiterbahnen verbunden sind, Unter Zwischenlage einer Isolierschicht liegen an den Leiterbahnen gewellte Rippen an, die die von dem elektrischen Heizelement erzeugte und/oder dem warmem Wasser abgegebene Wärme an Luft abgeben. Dieses Dokument offenbart den Oberbegriff des Anspruchs 1.

Eine weiterer gattungsgemäßer Stand der Technik ist beispielsweise aus der EP-A1-1 768 458 bekannt. Die dort beschriebene elektrische Heizvorrichtung weist eine erhöhte elektrische Durchschlagsfestigkeit auf und eignet sich insbesondere für den Hochvoltbetrieb. Bei diesem Stand der Technik sind an der Außenseite der Leiterbahnen jeweils Isolierschichten vorgesehen, so dass die wärmeabgebenden Elemente unter Zwischenlage der Isolierschicht an dem zugeordneten wärmeerzeugenden Element anliegen und potentialfrei sind. Ein auf der elektrischen Heizvorrichtung aufliegender elektrisch leitender Fremdkörper, der beispielsweise an gegenüberliegenden Seiten des wärmeerzeugenden Elementes anliegende wärmeabgebende Elemente berührt, führt daher zu keinem Kurzschluss.

Als elektrische Heizvorrichtung im Sinne der vorliegenden Erfindung kann neben einem Luftheizer, wie er durch die EP-A1-1 768 458 gegeben ist, auch ein Heizer für flüssiges Medium angesehen werden, wie er beispielsweise aus der auf die Anmelderin zurückgehenden EP-A1-1 872 986 bekannt ist. Bei diesem Stand der Technik sind die wärmeerzeugenden Elemente in unterseitig geschlossene Taschen eingeschoben und liegen an den Innenseiten dieser Taschen an. Die jeweils sich im wesentlich parallel erstreckenden Seitenwände dieser Taschen sind als wärmeabgebende Elemente im Sinne der vorliegenden Erfindung anzusehen. Es kommt danach nicht darauf an, dass die wärmeabgebenden Elemente jeweils als separate Bauteile vorgesehen sind. Vielmehr wird mit der Formulierung nach Anspruch 1 darauf abgestellt, dass diese jeweils an sich gegenüberliegenden Seitenflächen des wärmererzeugenden Elementes vorgesehen sind.

Der vorliegenden Erfindung liegt das Problem zugrunde, eine elektrische Heizvorrichtung der eingangs genannten Art anzugeben, die den praktischen Anforderungen, insbesondere bei einem Hochvoltbetrieb in verbesserter Weise gerecht werden kann.

Zur Lösung dieses Problems wird mit der vorliegenden Erfindung eine elektrische Heizvorrichtung mit den Merkmalen von Anspruch 1 vorgeschlagen.

Bei der erfindungsgemäßen elektrischen Heizvorrichtung liegt ein wärmeabgebendes Element, wie bereits aus der EP-A1-1 768 458 bzw. der EP-A1-1 872 986 bekannt, unter Zwischenlage einer elektrischen Isolierschicht an dem dem wärmeabgebenden Element zugeordneten wärmeerzeugenden Element an, um die von diesem wärmerzeugenden Element erzeugte Wärme zunächst durch Wärmeleitung aufzunehmen und an ein das wärmeabgebende Element anstrahlendes Medium abzugeben. Dieses durch die Isolierschicht potentialfrei gegenüber dem wärmeerzeugenden Element vorgesehene wärmeabgebende Element ist vielmehr aber auch elektrisch an das Massepotential des Kraftfahrzeuges anbindbar. Diese Anbindung erfolgt üblicherweise durch elektrische Kontaktierung des entsprechenden wärmeabgebenden Elementes mit einer elektrischen Leitungsführung innerhalb der elektrischen Heizvorrichtung, die über eine elektrische Schnittstelle, die an der elektrischen Heizvorrichtung ausgebildet ist, an die Masse des Kraftfahrzeuges anbindbar ist.

Die erfindungsgemäße elektrische Heizvorrichtung bietet die Möglichkeit einer Abschirmung durch das wärmeabgebende Element, welches an das Massepotential angeschlossen ist. So ist es beispielsweise möglich, an das Massepotential angeschlossene wärmeabgebende Elemente jeweils an der Außenseite eines Heizblocks anzuordnen, um diesen außenseitig abzuschirmen. Als Heizblock wird üblicherweise ein Schichtaufbau aus wenigstens einem wärmeerzeugenden Element und daran anliegenden wärmeabgebenden Elementen verstanden. Abhängig von der zu erzeugenden Heizleistung können mehrere parallele Schichten von wärmeerzeugenden Elementen von dem Heizblock umfasst sein. Der Heizblock wird zur Verwirklichung der vorliegenden Erfindung vorzugsweise unter der Vorspannung einer in dem Gehäuse angeordneten Feder an diesen gehalten. Üblicherweise ist das Gehäuse ein den Heizblock rahmenförmig umgebendes Gehäuse.

Die vorliegende Erfindung bietet weiterhin den Vorteil, das üblicherweise aus mäandrierend gebogenem Blechband gebildete wärmeabgebende Element über den eigentlichen Heizblock hinaus zu verlängern. So ist es denkbar, das Blechmaterial des wärmeabgebenden Elementes gerade und parallel zu den Lagen des Schichtaufbaus über diesen hinaus zu verlängern, um eine durch das wärmeabgebende Element bewirkte Abschirmung des Heizblocks auch in Verlängerung der Lagen des Schichtaufbaus und seitlich neben dem Heizblock vorzusehen. Dort können Steuerkomponenten einer in baulicher Einheit mit der elektrischen Heizvorrichtung vorgesehenen Steuervorrichtung vorgesehen sein, die über eine solche Verlängerung des Blechmaterials des wärmeabgebenden Elementes in die Abschirmung einbezogen werden können.

Die Abschirmung des Heizblocks bzw. integral vorgesehener Steuerkomponenten ist nicht zuletzt im Hinblick auf die EMV-Problematik relevant. Bei elektrischen Heizvorrichtungen der gattungsgemäßen Art in einem Kraftfahrzeug werden üblicherweise hohe elektrische Leistungen geschaltet, was zu elektromagnetischen Störungen innerhalb des Kraftfahrzeuges führen kann. Durch Einbinden von einem, vorzugsweise mehreren, bevorzugt von sämtlichen wärmeabgebenden Elementen des Heizblocks an das Massepotential des Kraftfahrzeuges, können diese unerwünschten Effekte reduziert, wenn nicht gar eliminiert werden.

Gemäß einer bevorzugten Weiterbildung der vorliegenden Erfindung sind an dem Gehäuse freiliegende elektrische Anschlusselemente zur Bestromung der elektrischen Leiterbahnen sowie zumindest ein Masseanschluss vorgesehen. Diese Anschlusselemente sind vorzugsweise in Form von Steckerelementen ausgebildet, so dass die elektrische Heizvorrichtung nach einfacher Montage elektrisch an das Bordnetz und die Masse eines Kraftfahrzeuges angebunden werden kann.

Im Hinblick auf die bereits zuvor erwähnte EMV-Problematik hat es sich als vorteilhaft erwiesen, den Masseanschluss ringförmig um wenigstens ein elektrisches Anschlusselement vorzusehen und mit einer Abschirmung eines zu dem elektrischen Anschlusselement führenden Anschlusskabels zu verbinden. Das besagte elektrische Anschlusskabel kann ein Leistungskabel sein, d.h. den Leistungsstrom zum Betrieb der elektrischen Heizvorrichtung dieser zu führen. Üblicherweise sind sämtliche elektrische Versorgungsleitungen in dem Anschlusskabel vorgesehen. Das elektrische Anschlusskabel kann aber auch gegebenenfalls ein Signalkabel zur Ansteuerung von Schaltungselementen einer integral an der elektrischen Heizvorrichtung vorgesehenen Steuervorrichtung sein. Ungeachtet der Anzahl der Adern des Kabels, ist dieses üblicherweise mit einer auf Masse geerdeten Abschirmung versehen, die mit dem ringförmigen Masseanschluss verbindbar ist. Üblicherweise erfolgt die Verbindung über eine Steckverbindung.

Bei Hochvoltanwendungen der gattungsgemäßen elektrischen Heizvorrichtung, d.h. bei einem Betrieb derselben mit Spannungen von 220 Volt und mehr, wird aus Sicherheitsgründen üblicherweise eine Isolierschicht auf der Außenseite der elektrischen Leiterbahnen zu jedem wärmeerzeugenden Element vorgesehen, um sämtliche, von dem Medium angestrahlten Flächen der elektrischen Heizvorrichtung potentialfrei zu halten. Da allerdings nicht immer ausgeschlossen werden kann, dass die Isolierschicht über die Standzeit der elektrischen Heizvorrichtung ohne Schaden bleibt, wird gemäß einer weiteren bevorzugten Ausgestaltung der vorliegenden Erfindung ein Massewächter vorgeschlagen, der dem wenigstens einen wärmeabgebenden Element, das an das Massepotential anbindbar ist, zugeordnet ist. Dieser Massewächter überwacht das Potential des entsprechenden wärmeabgebenden Elementes und vergleicht dieses üblicherweise mit dem Massepotential des Fahrzeuges. Eine fehlerhafte Isolierschicht führt unmittelbar zu einem Potentialunterschied, den der Massewächter erkennt und in Form eines auf eine Störung hinweisenden Signals angezeigt werden kann.

Durch die mit der Erfindung vorgeschlagenen Merkmale eignet sich die erfindungsgemäße elektrische Heizvorrichtung insbesondere für den Betrieb in einem Hochleistungselektroautomobil. Dabei ist es denkbar, die elektrische Heizvorrichtung nach der vorliegenden Erfindung mit Betriebsspannungen von bis zu 500 Volt in einem Elektro- oder Hybridauto zu betreiben. Die vorliegend im Einzelnen diskutierten, die Sicherheit der elektrischen Heizvorrichtung jeweils für sich und auch in Kombination bewirkenden Maßnahmen, ermöglichen einen Betrieb der erfindungsgemäßen elektrischen Heizvorrichtung bei entsprechend hohen Spannungen. So kann mit der vorliegenden Erfindung eine elektrische Heizvorrichtung angegeben werden, deren Wärmeleistung weit über dem heutzutage üblichen Bereich von etwa 2 KW liegt. Denkbar sind elektrische Heizvorrichtungen mit einer Wärmeleistung von zwischen 3 und 10 KW, insbesondere bis zu 6 KW. Die Abschirmung des Heizblocks durch die an Masse anliegenden Radiatorlagen führt nicht nur im Hinblick auf die EMV-Problematik zu einem verbesserten elektrischen Zuheizer. Vielmehr können sämtliche wärmeabgebenden Elemente, d.h. sämtliche Radiatorelemente an den Masseanschluss angeschlossen und über den Massewächter überwacht werden.

Es wird heutzutage davon ausgegangen, dass bei einem hochvoltigen Betrieb von elektrischen Heizvorrichtungen zwischen sämtlichen wärmeabgebenden Elementen und den wärmeerzeugenden Elementen Isolierschichten vorgesehen sind. Diese Isolierschichten können aus Keramik, Kunststofffolie oder einer Kombination aus beiden Werkstoffen gebildet sein. Wesentlich ist eine hohe elektrische Durchschlagsfestigkeit der Isolierschicht. Wegen der guten Wärmeleitfähigkeit ist der Einsatz von Keramikschichten zur elektrischen Isolation zwischen dem wärmeerzeugenden Element und dem daran anliegenden wärmeabgebenden Element sehr wahrscheinlich. Keramik bringt allerdings den Nachteil mit sich, dass diese sehr spröde ist. Zwar kann durch einen Sandwichaufbau aus Keramik und einem weniger spröden Material, beispielsweise einer Kunststofffolie diesen Nachteilen entgegengewirkt werden. Gleichwohl muss bei einer hochvoltigen Anwendung verhindert werden, dass ein Kurzschluss auftritt. Hier kann zwar, aufgrund des Massewächters und bei einer durch den Massewächter detektierten Fehlermeldung, der Leistungsstrom durch eine dem Massewächter zugeordneten Steuervorrichtung abgeschaltet werden.

Mit der vorliegenden Erfindung werden aber auch weitere Maßnahmen vorgeschlagen, wie die elektrische Sicherheit, insbesondere bei einem Hochvoltbetrieb verbessert werden kann.

Die elektrische Sicherheit und eventuelle Kriechströme, die auch durch eine gegebenenfalls vorgesehene elektrische Isolierung hindurch bzw. an dieser vorbei nicht ausgeschlossen werden können, führen dann nicht zu erheblichen Problemen, wenn gemäß einer bevorzugten Ausgestaltung der vorliegenden Erfindung sämtliche wärmeerzeugenden Elemente in einer Weise in das Gehäuse eingebaut sind, dass die einander benachbarten wärmeerzeugenden Elemente sich jeweils mit ihren Leiterbahnen identischer Polarität gegenüberliegen. Wenngleich die zwischen einander gegenüberliegenden wärmeabgebenden Elementen im Falle einer Isolierschicht zwischen den wärmeabgebenden Elementen und den wärmeerzeugenden Elementen vorgesehenen wärmeerzeugenden Elemente elektrisch isoliert zu den wärmeabgebenden Elementen sind, liegt das zwischen benachbarten wärmeerzeugenden Elementen vorgesehene wärmeabgebende Element unter Zwischenlage der Isolierschicht gegen jeweils Leiterbahnen identischer Polarität an. Danach ergibt sich eine Ausgestaltung, bei welcher zwischen einem ersten Paar von wärmeerzeugenden Elementen ein wärmeabgebendes Element elektrisch durch die Isolierschicht isoliert zwischen zwei Plusleiterbahnen anliegt, wohingegen das nächste wärmeabgebende Element unter Zwischenlage einer Isolierschicht zwischen zwei Minuspolen vorgesehen ist. Statt eines einzigen wärmeabgebenden Elementes, können auch mehrere, vorzugsweise identisch ausgebildete wärmeabgebende Elmente zwischen zwei wärmeerzeugenden Elementen vorgesehen sein. Im Falle von Defekten in der Isolierschicht kommt es daher nicht über das wärmeabgebende Element zu einem Kurzschluss zwischen zwei wärmeerzeugenden Elementen.

Die elektrische Sicherheit einer solchen Ausgestaltung kann dadurch zusätzlich verbessert werden, dass ein Fehlstrommesser als Teil der Steuervorrichtung der elektrischen Heizvorrichtung vorgesehen ist. Dieser Fehlstrommesser kann beispielsweise Leckage- bzw. Kriechströme ermitteln und einen Fehler in der gewünschten elektrischen Isolation feststellen. Ein auf einen Fehler hinweisendes Signal des Fehlstrommessers kann zum Abschalten der gesamten elektrischen Heizvorrichtung führen. Der Fehlstrommesser kann auch vor der Auslieferung der elektrischen Heizvorrichtung eingesetzt werden, um eventuelle Montagefehler zu detektieren.

Die zuvor vorgestellte Ausführungsform, bei welcher die Leiterbahnen benachbarter wärmeerzeugender Elemente jeweils sich mit gleicher Polarität einander gegenüberliegen, kann für sich erfindungswesentlich sein. Für die Verwirklichung dieser Lösung ist es nicht erforderlich, dass das wärmeabgebende Element elektrisch an ein Massepotential angeschlossen ist. Allerdings ist es zu bevorzugen, jeweils eine Isolierschicht zwischen dem wärmeabgebenden Element und dem zugeordneten wärmeerzeugenden Element vorzusehen. Der Lösungsvorschlag ist insbesondere dann bedeutsam, wenn mehr als zwei wärmeerzeugende Elemente in das Gehäuse eingebaut werden.

Im Hinblick auf eine einfache Montage, ist der Fehlstrommesser und/oder der Massewächter vorzugsweise integral in dem Gehäuse aufgenommen, und zwar als Teil einer an dem Gehäuse angeordneten Steuervorrichtung. Mit dieser Ausgestaltung lässt sich die elektrische Heizvorrichtung als einheitliches Bauteil in das Kraftfahrzeug einbauen. Üblicherweise wird die Steuervorrichtung über ein Bus-System in das Datenkommunikationsnetz des Fahrzeuges eingebaut. Dieses Kommunikationsnetz kann auch das Fehlersignal des Massewächters verarbeiten und an einem Servicestecker bzw. an einer Anzeige im Fahrzeuginnenraum erfassbar machen.

Die Ansprüche 6 bis 8 geben Weiterbildungen der bereits zuvor vorgestellten Abschirmung an. So sind vorzugsweise die äußeren wärmeabgebenden Elemente des Heizblocks zur Ausbildung einer die Heizvorrichtung umgebenden Abschirmung elektrisch miteinander verbunden. Die Verbindung der äußeren wärmeabgebenden Elemente kann ein- oder beidseitig erfolgen, so dass der Heizblock mit einer gegebenenfalls integral in dem Gehäuse aufgenommenen Steuervorrichtung umfänglich von einer Abschirmung umgeben sind. Die Abschirmung umgibt dabei üblicherweise umfänglich den Heizblock und die zugeordnete Steuervorrichtung und erstreckt sich zwischen der Einlassöffnung für das zu erwärmende Medium und der Auslassöffnung. Die Abschirmung kann aber auch Wandungsabschnitte haben, die sich parallel zu der von dem Medium durchsetzten Ebene an der Ein- und/oder Auslassöffnung für das zu erwärmende Medium, die durch das Gehäuse ausgespart ist, erstrecken.

Zur einfachen Ausbildung eines Teils der Abschirmung wird vorzugsweise ein Abschirmblech verwendet, welches sich quer zu den Schichten des Heizblocks erstreckt und die äußeren wärmeabgebenden Elemente elektrisch miteinander verbindet. Das Abschirmblech ist dabei in Bezug auf den Heizblock so angeordnet, dass es das wenigstens eine wärmeerzeugende Element außenseitig umgibt. Vorzugsweise erfolgt dabei die elektrische Verbindung zwischen den äußeren wärmeabgebenden Elementen und dem Abschirmblech durch Steckerverbindungen. Die wärmeabgebenden Elemente und das wenigstens eine Abschirmblech sind vorzugsweise durch Stanz- und/oder Biegebearbeitung von Blechstreifen ausgeformt.

Weitere Einzelheiten der vorliegenden Erfindung ergeben sich aus der nachfolgenden Beschreibung eines Ausführungsbeispiels in Verbindung mit der Zeichnung. In dieser Zeichnung:
- Figur 1: eine Seitenansicht eines Ausführungsbeispiels,
- Figur 2: eine perspektivische Seitenansicht des in Figur 1 gezeigten Ausführungsbeispiels von der gegenüberliegenden Seitenfläche:
- Figur 3: das in Figur 2 eingezeichnete Detail III in vergrößerte Darstellung;
- Figur 4: das in Figur 2 gezeigte Gehäuseteil vor dem Einbau des Heizblocks;
- Figur 5: die in Figur 4 dargestellte Einzelheit V in vergrößerter Darstellung; und
- Figur 6: eine Seitenansicht eines Heizblocks eines Ausführungsbeispiels zur Verdeut- lichung des elektrischen Anschlusses der einzelnen Elemente des Heizblocks im Sinne der vorliegenden Erfindung.

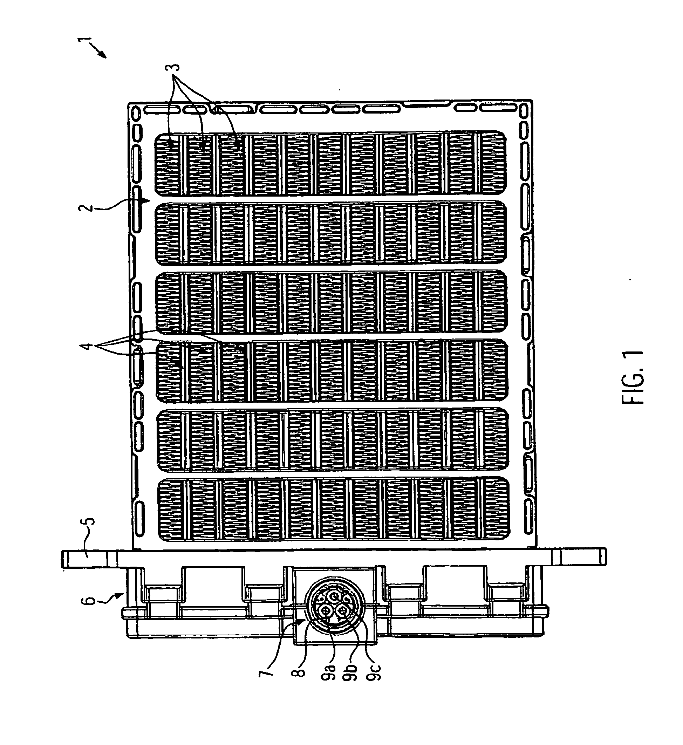

Die Figur 1 zeigt eine Seitenansicht eines Ausführungsbeispiels einer elektrischen Heizvorrichtung mit einem rahmenförmigen Gehäuse 1, welches aus zwei Kunststoffschalen gebildet ist und in sich einen Heizblock 2 aufnimmt. Der Heizblock 2 umfasst mehrere wärmeabgebende Elemente 3 und mehrere wärmeerzeugende Elemente 4, die in parallelen Schichten vorgesehen sind. Bei dem gezeigten Ausführungsbeispiel ist an jedenfalls einem Längsholm des rahmenförmigen Gehäuses 1 ein Federelement (nicht dargestellt) vorgesehen, welches den Heizblock 2 innerhalb des rahmenförmigen Gehäuses 1 unter Federvorspannung hält, so dass die Lagen des Schichtaufbaus gegeneinander gedrückt gehalten sind. Seitlich zu dem Heizblock 2 weist das Gehäuse 1 einen Befestigungsflansch 5 sowie einen den Befestigungsflansch 5 überragendes Steuergehäuse 6 auf. In diesem Steuergehäuse 6 befindet sich eine nicht mehr dargestellte elektrische Steuervorrichtung.

Das in Figur 1 dargestellte Ausführungsbeispiel kann mit Steuerkabeln und Leistungskabeln elektrisch an das Bordnetz und das Datennetz des Kraftfahrzeuges angeschlossen werden. Bei dem gezeigten Ausführungsbeispiel ist an dem Steuergehäuse 6 ein mit Bezugszeichen 7 gekennzeichneter Steckeranschluss für das Leistungskabel und für den Masseanschluss vorgesehen. Der Steckeranschluss weist nicht näher ausgeführte Befestigungs- und Führungsflächen aus Kunststoff für einen anzuschließenden Gegenstecker am Ende eines Leistungskabels auf. Das Leistungskabel hat eine umfänglich ausgebildete Abschirmung, die mit einem ringförmigen Masseanschluss 8 nach Herstellen der Steckverbindung elektrisch verbunden ist. Dieser ringförmige Masseanschluss 8 überragt das Steuergehäuse 6 und umgibt elektrische Anschlusselemente 9a bis 9c zum elektrischen Anschluss der Leistungskabel. Über in dem Gehäuse 1 ausgebildete Leitungsbahnen ist der Masseanschluss 8 mit den einzelnen wärmeabgebenden Elementen 3 verbunden. Die elektrischen Anschlusselemente 9a bis 9c werden über in dem Steuergehäuse 6 aufgenommene Leistungsschalter an einzelnen bzw. zu Gruppen zusammengefasste wärmeerzeugende Elemente 4 verbunden, um diese zu bestromen.

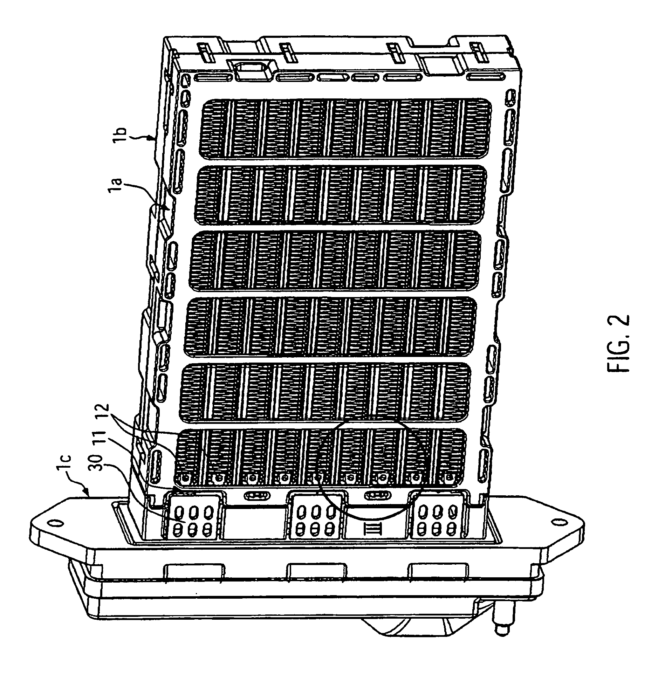

Die perspektivische Seitenansicht nach Figur 2 lässt den Aufbau des Gehäuses 1 deutlicher erkennen. Das Gehäuse 1 besteht aus zwei Gehäuseteilen 1 a, 1 b, die jeweils identisch ausgebildet sind und endseitig von dem Steuergehäuse 6 überragt werden. In dem Steuergehäuse 6 ist eine Steuereinrichtung für die elektrische Heizvorrichtung vorgesehen, die unter anderem elektronische Steuerkomponenten für das Steuern des Heizblocks 2 umfasst. Die durch die Steuerkomponenten erzeugte Abwärme wird über die mit Bezugszeichen 30 gekennzeichneten Kühlelemente an die den Heizblock 2 anströmende Luft abgeführt. Hierzu bildet das Gehäuse 1 seitlich neben den Öffnungen zu dem Heizblock 2 jeweils drei Durchströmungskanäle aus, die zu den Kühlelementen 30 führen. Ein benachbart zu den Kühlelementen 30 vorgesehener Querholm 11 des Gehäuses wird innenseitig durch ein Leiterelement 10 mit metallischen Krallen 12 überragt, die in etwa auf Höhe der Innenfläche des Gehäuseteiles 1 a liegen und mit den wärmeabgebenden Elementen 3 zusammenwirken, derart, dass die Krallen 12 elektrisch mit den meandrierend gebogenen Blechstreifen des wärmeabgebenden Elementes 3 kontaktiert sind. Sämtliche wärmeabgebende Elemente 3 wirken mit einer entsprechenden Kralle 12 zusammen, d.h. sind über das Leiterelement 10 elektrisch miteinander verbunden.

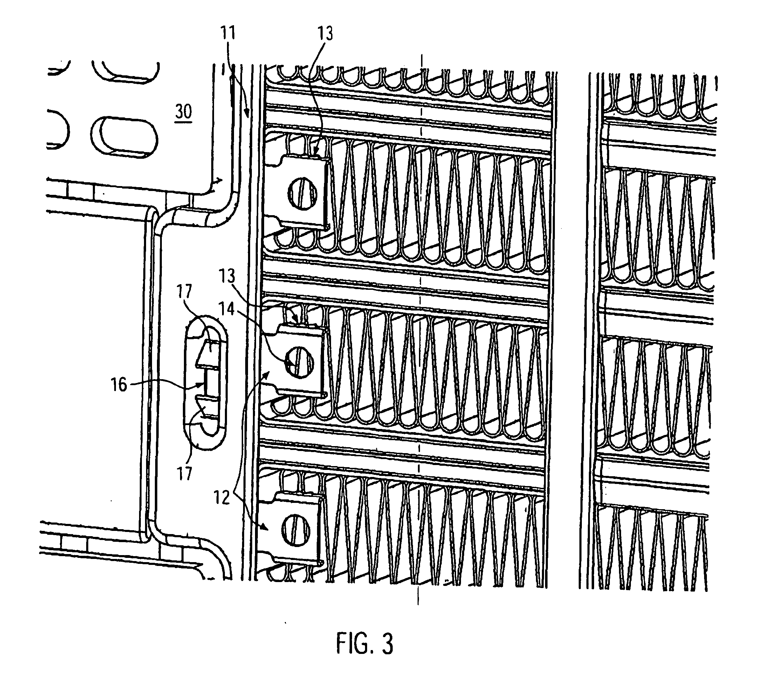

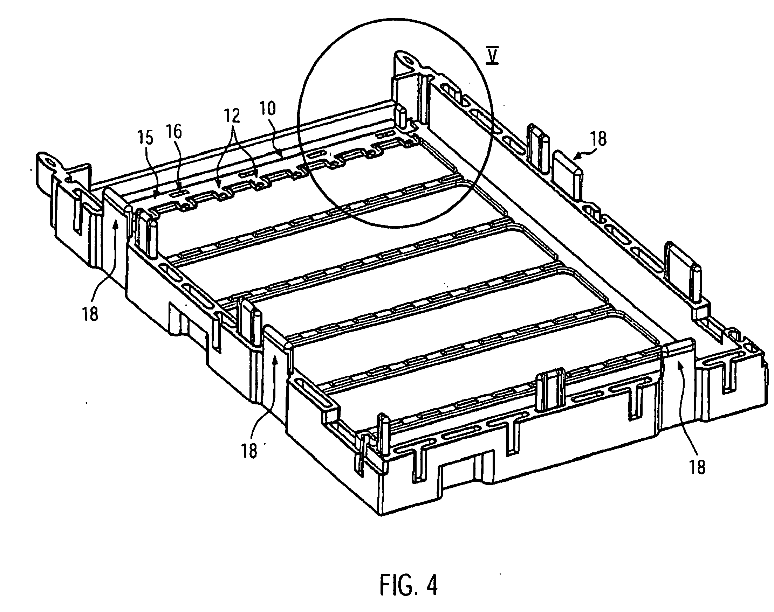

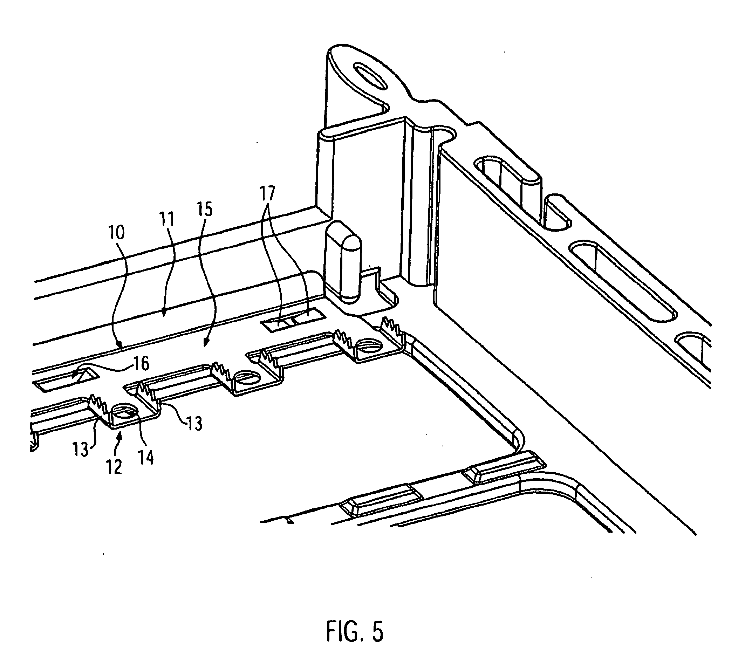

Wie insbesondere Figur 4 erkennen lässt, sind die Krallen 12 durch Stanzbearbeitung eines Blechbandes ausgeformt. Die Krallen 12 sind an der heizblockseitigen Längsseite des Blechbandes durch Stanzen freigeschnitten und durch eine Stanz-Biegeausformung mit seitlichen Zahnreihen 13 ausgeformt, die in Figur 3 zu erahnen und in Figur 5 zu erkennen sind. Diese Zahnreihen 13 weisen einen sich in durch Strömungsrichtung, d.h. rechtwinklig zu den Lagen des Heizblocks 2 erstreckenden Steg auf, von dem ein Zahnprofil abragt, welches mit den Wellrippen des wärmeabgebenden Elementes 3 zusammenwirkt. Zur Verminderung des durch die Krallen 12 bewirkten Strömungswiderstands ist mittig in den Krallen 12 eine Aussparung 14 vorgesehen.

Die Krallen 12 ragen von einer länglichen Leiterelementbasis 15 ab, die sich parallel zu dem Querholm 11 erstreckt und auf der Innenseite desselben anliegt. Zur Befestigung sind an dem Querholm 11 Rastausnehmungen 16 ausgespart. Diese Rastausnehmungen 16 befinden sich jeweils zwischen den Kühlelementen 30 (vgl. Figur 2). An der Leiterelementbasis 15 sind durch Stanzen und Biegen federnde Rastlaschen 17 ausgebildet. Die Leiterelementbasis 15 lässt sich dementsprechend durch Verklipsen und Zusammenwirken der Rastausnehmungen 16 mit den Rastlaschen 17 an dem Gehäuseteil 1 befestigen. Die Leiterelementbasis 15 ist üblicherweise über einen Kontaktsteg, der beispielsweise durch Stanzen und/oder Biegen ausgebildet sein kann, elektrisch mit Teilen des Steuergehäuses verbunden. Dort befindet sich üblicherweise auch ein Massewächter und/oder ein Fehlstrommesser, der üblicherweise mit der Leiterelementbasis 15 elektrisch verbunden ist.

In die in Figur 4 ersichtliche Einheit aus einem spritzgegossenen Kunststoffteil 1a und dem aus Blech gebildeten Leiterelement 10 bestehend aus der Leiterelementbasis 15 und den Krallen 12, wird der Heizblock 2 eingesetzt. Dabei wird jeweils ein wärmeabgebendes Element 3 auf jeweils eine Kralle 12 aufgesetzt. In das Gehäuseteil 1a wird des Weiteren wenigstens eine Feder eingesetzt, die den Heizblock, respektive die den Heizblock 2 bildenden Schichten nach der Endmontage der elektrischen Heizvorrichtung unter Vorspannung setzt, und zwar mit einer Federkraft, die quer zu den Lagen des Heizblocks 2 und innerhalb der Ebene des Heizblocks 2 wirkt.

Nachdem die Elemente des Heizblocks 2 und das wenigstens eine Federelement in das Gehäuseteil 1a eingebaut wurden, wird das Gehäuse 1 verschlossen. Bei diesem Schließen des Gehäuses federn mit Bezugszeichen 18 gekennzeichnete und an den Gehäuseteilen 1 a, 1 b vorgesehene Rastzungen ein, so dass die beiden Gehäuseteile 1 a, 1 b miteinander verbunden sind. Am Ende der Fügebewegung in Richtung des den Heizblock 2 durchströmenden Luftstromes werden die Krallen 12 mit ihren Zahnreihen 13 gegen die wärmeabgebenden Elemente gedrängt, die sich daraufhin jedenfalls teilweise plastisch verformen. Am Ende der Fügebewegung sind die Krallen 12 elektrisch zuverlässig mit den wärmeabgebenden Elementen 3 verbunden.

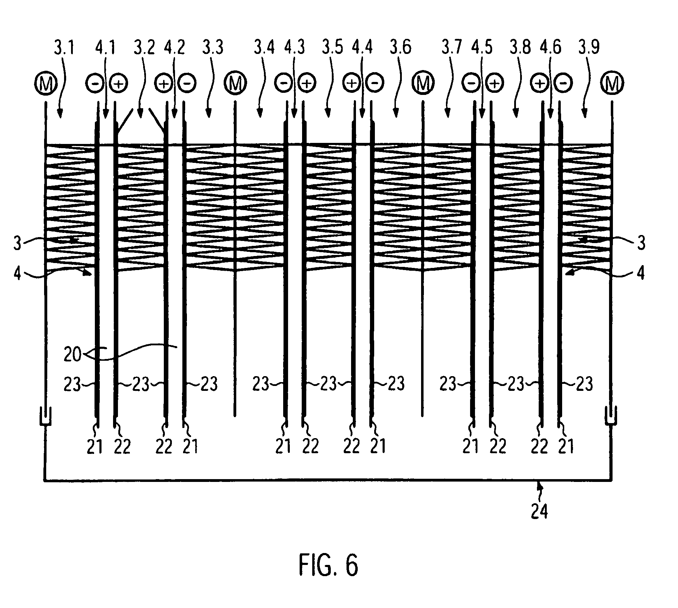

Die elektrische Zuordnung der einzelnen Elemente des Heizblocks 2 zu den Anschlusselementen 8, 9a-9c ergibt sich aus der Darstellung in Figur 6. Diese zeigt schematisch einen Heizblock mit mehreren wärmeerzeugenden Elementen 4, die jeweils mit paralleler Ausrichtung relativ zueinander vorgesehen sind und jeweils zumindest ein PTC-Element 20 umfassen, welches zwischen Leiterbahnen 21, 22 angeordnet ist und über diese Leiterbahnen 21, 22 bestromt wird. An der Außenseite der Leiterbahnen 21, 22 befinden sich jeweils elektrisch isolierende Isolierschichten 23.

An den wärmeerzeugenden Elementen 4 liegen jeweils beidseitig die als Wellrippen ausgebildeten wärmeabgebenden Elemente 3 an. Wie die Figur 6 erkennen lässt, können sich zwei wärmeerzeugende Elemente 4.1, 4.2; 4.5, 4.6 jeweils ein wärmeabgebendes Element 3.2 bzw. 3.8 teilen. Ebenso gut können zwischen zwei benachbarten wärmeerzeugenden Elementen 4.2, 4.3 zwei identische wärmeabgebende Elemente 3.3, 3.4 vorgesehen sein.

Bei dem mit Figur 6 verdeutlichten Ausführungsbeispiel sind sämtliche wärmeerzeugende Elemente 4 jeweils außenseitig mit der Isolierschicht 23 belegt, so dass sämtliche wärmeabgende Elemente 3 potentialfrei vorgesehen sind. Über Masseanschlüsse, die über die Krallen 12 gebildet und in dem elektrischen Anschlussdiagramm gemäß Figur 6 mit Bezugszeichen M gekennzeichnet sind, sind die wärmeabgebenden Elemente 3 jeweils mit dem Masseanschluss 8 elektrisch verbunden. Entsprechendes gilt für die als Blechbänder ausgebildeten Leiterbahnen 21, 22 in Bezug auf die elektrischen Anschlusselemente 9a bis 9c für den Leistungsstrom. Die Leiterbahnen 21 sind jeweils an den Minus- bzw. Massepol und die Leiterbahnen 22 jeweils an den Pluspol einer Stromquelle angeschlossen. Dieser Anschluss erfolgt jedoch regelmäßig über Zwischenschaltung von Leistungsschaltern, die in dem Steuergehäuse 6 aufgenommen und über eine Logikschaltung in diesem schaltbar sind. In dem Gehäuse ist ferner ein nicht dargestellter Massewächter vorgesehen, der elektrisch mit sämtlichen Masseanschlüssen M verbunden ist und vorzugsweise einen Potentialabgleich zwischen diesen und dem Massanschluss 8 durchführt, um eventuelle Störungen einer Isolierschicht 23 zu ermitteln, die zu einem Potentialunterschied führen würde. Allerdings ist die Anordnung nach Figur 2 so gewählt, dass es selbst bei einer Störung der Isolierschicht noch nicht zu einem Kurzschluss kommt. So liegen die identischen Polaritäten unterschiedlicher und benachbarter wärmeerzeugender Elemente 4 jeweils einander gegenüber. Beiderseits der zwischen zwei wärmeerzeugenden Elementen 4 angeordneten wärmeabgebenden Elemente 3.2; 3.3, 3.4; 3.5; 3.6, 3.7 bzw. 3.8 und getrennt von den Isolierschichten 23 befinden sich demnach Blechbänder identischer Polarität.

In Figur 6 ist eine konkrete Ausgestaltung einer Abschirmung des Heizblocks 2 schematisch dargestellt, die durch ein Abschirmblech 24 gebildet ist, welche sich im wesentlichen rechtwinklig zu den Lagen des Heizblocks 2 erstreckt und mit den freien Enden der äußeren wärmeabgebenden Elemente 3.1 bzw. 3.9 verbunden ist. Ein entsprechendes Abschirmblech 24 kann derart vorgesehen sein, dass die Steuerelemente einer Steuervorrichtung sich innerhalb der Abschirmung befinden. Die Abschirmung kann beispielsweise auch als Teil eines Gehäusedeckels für das Steuergehäuse 6 ausgebildet und erst nach Schließen des Steuergehäuses 6 durch den Gehäusedeckel elektrisch mit den äußeren wärmeabgebenden Elementen 3.1 bzw. 3.9 verbunden sein.

### Bezugszeichenliste

- 1: Gehäuse
- 1 a: Gehäuseteil
- 1b: Gehäuseteil
- 2: Heizblock
- 3: wärmeabgendes Element
- 4: wärmeerzeugendes Element
- 5: Befestigungsflansch
- 6: Steuergehäuse
- 7: Steckeranschluss
- 8: Masseanschluss
- 9a bis 9c: Anschlusselement
- 10: Leiterelement
- 11: Querholm
- 12: Kralle
- 13: Zahnreihe
- 14: Aussparung
- 15: Leiterelementbasis
- 16: Rastausnehmungen
- 17: Rastlasche
- 18: Rastzunge
- 20: PTC-Element
- 21: Leiterbahn
- 22: Leiterbahn
- 23: Isolierschicht
- 24: Abschirmblech
- 30: Kühlelement
- M: Masseanschluss
- -: Minuspol des Leistungsstroms
- +: Pluspol des Leistungsstroms

## Patentansprüche

1. Elektrische Heizvorrichtung, insbesondere für ein Kraftfahrzeug, mit einem Gehäuse (1), in dem wenigstens ein wärmeerzeugendes Element (4) mit wenigstens einem PTC-Element (20) und an gegenüberliegenden Seitenflächen des wenigstens einen PTC-Elementes (20) anliegenden elektrischen Leiterbahnen (21, 22) und mehrere in parallelen Schichten angeordnete wärmeabgebende Elemente (3) aufgenommen sind, die an gegenüberliegenden Seiten des wenigstens einen wärmeerzeugenden Elementes (4) angelegt gehalten sind,
wobei wenigstens ein wärmeabgebendes Element (3) unter Zwischenlage einer elektrischen Isolierschicht (23) an dem zugeordneten wärmeerzeugenden Element (4) anliegt,
**gekennzeichnet durch**,
an dem Gehäuse (1) freiliegende elektrische Anschlusselemente (9a - 9c) zur Bestromung der elektrischen Leiterbahnen (21, 22) und einen Masseanschluss (8), über welchen das wenigstens eine wärmeabgebende Element (3) elektrisch an ein Massepotential, insbesondere des Fahrzeuges anbindbar ist.

2. Elektrische Heizvorrichtung nach Anspruch 1, **dadurch gekennzeichnet, dass** der Masseanschluss (8) ringförmig um wenigstens einen der elektrischen Anschlusselemente (9a - 9c) vorgesehen und mit einer Abschirmung eines zu dem elektrischen Anschlusselement (9a - 9c) führenden Anschlusskabels verbindbar ist.

3. Elektrische Heizvorrichtung nach Anspruch 1 oder 2, **dadurch gekennzeichnet, dass** sämtliche wärmeabgebende Elemente (3) unter Zwischenlage einer elektrischen Isolierschicht (23) an dem zugeordneten wärmeerzeugenden Element (4) anliegen und an das Massepotential, insbesondere des Fahrzeuges anbindbar sind.

4. Elektrische Heizvorrichtung nach einem der vorherigen Ansprüche, **gekennzeichnet durch** zumindest einen wenigstens einem wärmeabgebenden Element (3) zugeordneten Massewächter.

5. Elektrische Heizvorrichtung nach Anspruch 4, **gekennzeichnet durch** eine an dem Gehäuse (1) angeordnete Steuervorrichtung, die den Massewächter umfasst.

6. Elektrische Heizvorrichtung nach einem der vorherigen Ansprüche, **dadurch gekennzeichnet, dass** die äußeren wärmeabgebenden Elemente (3.1, 3.9) zur Ausbildung einer die Heizvorrichtung umgebenden Abschirmung elektrisch miteinander verbunden sind.

7. Elektrische Heizvorrichtung nach Anspruch 6, **dadurch gekennzeichnet, dass** die Abschirmung die Heizvorrichtung umfänglich umgibt.

8. Elektrische Heizvorrichtung nach einem der vorherigen Ansprüche, **dadurch gekennzeichnet, dass** sämtliche wärmeerzeugende Elemente (4) derart in das Gehäuse eingebaut sind, dass die einander benachbarten wärmeerzeugenden Elemente (4) sich jeweils mit ihren Leiterbahnen (21, 22) identischer Polarität gegenüberliegen.

9. Elektrische Heizvorrichtung nach einem der Ansprüche 6 bis 8, **dadurch gekennzeichnet, dass** die äußeren wärmeabgebenden Elemente (3.1, 3.9) durch ein sich quer zu den Schichten erstreckendes Abschirmblech (24) elektrisch miteinander verbunden sind, welches das wenigstens eine wärmeerzeugende Element (4) außenseitig umgibt.

10. Elektrische Heizvorrichtung nach Anspruch 8 oder 9, **gekennzeichnet durch** eine elektrisch leitend mit einem Abschirmblech (24) verbundene und eine Steuerung der elektrischen Heizvorrichtung abschirmende Abschirmung.

## Claims

1. Electrical heating device, in particular for a motor vehicle, with a housing (1), in which are accommodated at least one heat generating element (4) with at least one PTC element (20) and electrical conductors (21, 22) abutting oppositely situated lateral faces of the at least one PTC element (20) and a plurality of heat dissipating elements (3) arranged in parallel layers are accommodated, which are held abutted on oppositely situated sides of the at least one heat generating element (4), wherein at least one heat dissipating element (3) is situated, with the intermediate positioning of an electrically insulating layer (23), on the assigned heat generating element (4), **characterised by** electrical connecting elements (9a - 9c) exposed from the housing (1) for supplying current to the electrical conductors (21, 22) and a ground connection (8), through which the at least one heat dissipating element (3) is electrically connectable to a ground potential, in particular of the vehicle.

2. Electrical heating device according to Claim 1, **characterised in that** the ground connection (8) is provided in an annular shape around at least one of the electrical connecting elements (9a - 9c) and is connectable to a shield of a connecting cable leading to the electrical connecting element (9a - 9c).

3. Electrical heating device according to Claim 1 or 2, **characterised in that** all heat dissipating elements (3) are located, with the intermediate positioning of an electrical insulating layer (23), on the assigned heat generating element (4) and is connectable to the ground potential, in particular of the vehicle.

4. Electrical heating device according to one of the preceding claims, **characterised by** at least one ground monitor assigned to at least one heat dissipating element (3).

5. Electrical heating device according to Claim 4, **characterised by** a control device arranged on the housing (1) and comprising the ground monitor.

6. Electrical heating device according to one of the preceding claims, **characterised in that** the outer heat dissipating elements (3.1, 3.9) are electrically connected together for forming a shield surrounding the heating device.

7. Electrical heating device according to Claim 6, **characterised in that** the shield circumferentially surrounds the heating device.

8. Electrical heating device according to one of the preceding claims, **characterised in that** all heat generating elements (4) are built into the housing such that the mutually adjacent heat generating elements (4) are each situated with their strip conductors (21, 22) of identical polarity opposite one another.

9. Electrical heating device according to one of the Claims 6 to 8, **characterised in that** the outer heat dissipating elements (3.1, 3.9) are connected together electrically by a shielding sheet (24) extending transversely to the layers and which surrounds the at least one heat generating element (4) on the outer side.

10. Electrical heating device according to Claim 8 or 9, **characterised by** a shield which is electrically connected to a shielding sheet (24) and shields a controller of the electrical heating device.

## Revendications

1. Dispositif de chauffage électrique, en particulier pour un véhicule automobile, avec un boîtier (1) dans lequel sont agencés au moins un élément de production de chaleur (4) avec au moins un élément PTC (20) et, sur des surfaces latérales opposées à l'au moins un élément PTC (20), des pistes conductrices électriques adjacentes (21, 22) et plusieurs éléments dispensateurs de chaleur (3) agencés en couches parallèles, qui sont appliqués sur des cotés opposés de l' au moins un élément de production de chaleur (4),
dans lequel au moins un élément dispensateur de chaleur (3) est adjacent à l'élément de production de chaleur correspondant (4) avec une couche d'isolation électrique (23) intercalée,
**caractérisé par**
des éléments de connexion électrique (9a - 9c) exposés dans le boîtier (1) pour alimenter les pistes conductrices électriques (21, 22) et une connexion de masse (8) via laquelle l'au moins un élément dispensateur de chaleur (3) peut être relié électriquement à un potentiel de masse, en particulier celui du véhicule.

2. Dispositif de chauffage électrique selon la revendication 1, **caractérisé en ce que** la connexion de masse (8) présente une forme annulaire entourant au moins un des éléments de connexion électrique (9a - 9c) et peut être connectée à un blindage d'un câble de connexion menant à l'élément de connexion électrique (9a - 9c).

3. Dispositif de chauffage électrique selon la revendication 1 ou 2, **caractérisé en ce que** tous les éléments dispensateurs de chaleur (3) sont adjacents à l'élément de production de chaleur correspondant (4) avec une couche d'isolation électrique (23) intercalée, et peuvent être reliés au potentiel de masse, en particulier celui du véhicule.

4. Dispositif de chauffage électrique selon l'une des revendications précédentes, **caractérisé par** au moins un contrôleur de masse associé à au moins un élément dispensateur de chaleur (3).

5. Dispositif de chauffage électrique selon la revendication 4, **caractérisé par** un dispositif de commande agencé sur le boîtier (1) qui comprend le contrôleur de masse.

6. Dispositif de chauffage électrique selon l'une des revendications précédentes, **caractérisé en ce que** les éléments dispensateurs de chaleur externes (3.1, 3.9) sont connectés électriquement entre eux pour constituer un blindage qui entoure le dispositif de chauffage.

7. Dispositif de chauffage électrique selon la revendication 6, **caractérisé en ce que** le blindage entoure largement le dispositif de chauffage.

8. Dispositif de chauffage électrique selon l'une des revendications précédentes, caractérisé en que tous les éléments de production de chaleur (4) sont installés dans le boîtier de telle manière que les éléments de production de chaleur adjacents (4) se font toujours face avec leurs pistes conductrices (21, 22) de même polarité.

9. Dispositif de chauffage électrique selon l'une des revendications 6 à 8, **caractérisé en ce que** les éléments dispensateurs de chaleur externes (3.1, 3.9) sont connectés électriquement entre eux via une tôle de blindage (24) qui s'étend perpendiculairement aux couches, ladite tôle entourant par l'extérieur l'au moins un élément de production de chaleur (4).

10. Dispositif de chauffage électrique selon la revendication 8 ou 9, **caractérisé par** un blindage en connexion électrique avec une tôle de blindage (24) et protégeant une commande du dispositif de chauffage électrique.
